# FASCICULE DE BREVET EUROPEEN

(11) **EP 2 986 803 B1**
(45) Date de publication et mention de la délivrance du brevet: **25.01.2017**
(21) Numéro de dépôt: 14715050.2
(22) Date de dépôt: 17.03.2014
(51) Int. Cl.: E21B 10/44, B23B 51/02, E21B 10/58

(54) **PLAQUETTE DE COUPE**
SCHNEIDEINSATZ
CUTTING INSERT

(30) Priorité: 19.04.2013 FR 1353601
(43) Date de publication de la demande: 24.02.2016
(73) Titulaire: DIAGER, 39800 Poligny (FR)
(72) Inventeur: BONHOMME, Olivier, F-39100 Baverans (FR)
(74) Mandataire: Chevalier, Renaud Philippe
(86) Numéro de dépôt international: PCT/FR2014/050609
(87) Numéro de publication internationale: WO 2014/170568

(56) Documents cités:
- WO-A1-01/61142
- US-A1- 2002 195 279

## Description

La présente invention concerne une plaquette de coupe et un outil de perçage.

Une plaquette de coupe connue du déposant est divulguée dans le document US6860344. Cette plaquette de coupe comporte une âme s'étendant axialement et trois branches identiques s'étendant radialement depuis l'âme. Les branches sont décalées angulairement de 120°. Le document US 2002/195279 divulgue également une plaquette de coupe.

Chaque branche présente une portion proximale connectée à l'âme, une portion distale, et une portion centrale reliant la portion proximale et la portion distale.

Chaque branche présente une arête de coupe s'étendant sur la portion proximale, la portion distale et la portion centrale.

Un inconvénient d'une telle plaquette de coupe réside dans sa faible capacité à évacuer les copeaux de matière lors du perçage. Aussi, lors d'un perçage les copeaux de matières tendent à s'accumuler entrainant une augmentation des frottements exercés sur la plaquette de coupe. Dès lors, la vitesse de perçage est diminuée et l'usure de la plaquette plus importante.

L'invention vise à remédier à cet inconvénient.

L'invention concerne une plaquette de coupe conçue pour être fixée à une extrémité d'un corps d'outil afin d'être entrainée en rotation autour d'un axe, comportant :
- une âme s'étendant axialement ; et
- au moins une première branche et une deuxième branche s'étendant radialement depuis l'âme, la première branche et la deuxième branche comprenant chacune :
   - une portion proximale raccordée à l'âme, une portion distale, et une portion centrale raccordant la portion proximale et la portion distale ; et
   - une arête de coupe s'étendant au moins sur la portion distale et la portion centrale ;
caractérisée en ce que :
- la portion distale de la première branche est disposée radialement en avant par rapport à la portion centrale de la première branche ; et
- la portion centrale de la deuxième branche est disposée radialement en avant par rapport à la portion distale de la deuxième branche.

Lors d'un perçage, le mouvement décrit par la plaquette de coupe est hélicoïdal. Le mouvement est ainsi une combinaison simultanée d'une translation et d'une rotation.

L'expression « radialement en avant » fait référence au sens de rotation de la plaquette de coupe.

L'expression « axialement en avant » fait référence au sens de translation de la plaquette de coupe.

La portion distale de la première branche est disposée radialement en avant par rapport à la portion centrale de la première branche.

En d'autres termes, en vue de dessus, la portion distale de la première branche est disposée en avant par rapport à la portion centrale de la première branche, l'avant se référant au sens de rotation.

Ainsi, l'arête de coupe de la première branche permet de guider vers l'intérieur les copeaux de matière en vue d'être évacués par le corps d'outil.

La portion centrale de la deuxième branche est disposée radialement en avant par rapport à la portion distale de la deuxième branche.

En d'autres termes, en vue de dessus, la portion centrale de la deuxième branche est disposée en avant par rapport à la portion distale de la deuxième branche, l'avant se référant au sens de rotation.

Ainsi, l'arête de coupe de la deuxième branche permet de guider vers l'extérieur le surplus de copeaux de matière n'ayant pu être évacués par le corps d'outil afin de limiter le risque de bourrage au niveau de l'âme.

Alors, la plaquette de coupe selon l'invention permet de faciliter l'évacuation des copeaux de matière.

La plaquette de coupe selon l'invention peut comporter une ou plusieurs des caractéristiques suivantes.

Suivant une caractéristique, l'arête de coupe de la première branche présente, au moins sur la portion distale et la portion centrale, un profil concave ; et
l'arête de coupe de la deuxième branche présente, au moins sur la portion distale et la portion centrale, un profil convexe.

Dans une forme d'exécution préférée, la plaquette de coupe comporte au moins une troisième branche comprenant :
- une portion proximale raccordée à l'âme, une portion distale, et une portion centrale raccordant la portion proximale et la portion distale ; et
- une arête de coupe s'étendant au moins sur la portion distale et la portion centrale.

Une augmentation du nombre de branches permet d'améliorer la stabilité de la plaquette de coupe lors du perçage.

Avantageusement, chaque arête de coupe de la première branche, de la deuxième branche et de la troisième branche comprend un point d'attaque disposé axialement en avant ; et
les points d'attaque de la première branche, de la deuxième branche et de la troisième branche sont disposés dans un même plan radial.

Lors de l'amorce du perçage, les points d'attaque de la première branche, de la deuxième branche et de la troisième branche reposent contre la matière. L'axe de la plaquette de coupe s'étend alors parfaitement perpendiculairement à la matière. Ainsi, le positionnement de la plaquette de coupe est facilité.

De préférence, les points d'attaque de la première branche, de la deuxième branche et de la troisième branche sont disposés autour d'un évidement ménagé à une extrémité de l'âme.

Un tel évidement permet d'éviter que l'extrémité de l'âme, qui présente une vitesse de rotation nulle, ne vienne freiner la plaquette de coupe par frottement.

De préférence, l'évidement est centré sur l'axe de la plaquette de coupe.

Avantageusement, l'évidement présente un fond de profil convexe.

Ainsi, lors du perçage le fond de l'évidement guide les copeaux de matière vers l'extérieur de l'évidement. Le risque d'accumulation de copeaux de matière et de bourrage à l'extrémité de l'âme est limité.

Suivant une forme d'exécution, la portion centrale de la troisième branche est plus large que la portion distale de la troisième branche, de sorte que l'arête de coupe de la troisième branche présente un décrochement.

La portion centrale de la troisième branche plus large que la portion distale renforce la troisième branche et empêche sa rupture. La troisième branche peut supporter davantage de pression que la première branche et la deuxième branche.

Avantageusement, l'arête de coupe de la troisième branche est, au moins en partie, axialement plus en avant que l'arête de coupe de la première branche et/ou que l'arête de coupe de la deuxième branche.

Ainsi, la troisième branche est agencée pour supporter davantage de pression que la première branche et/ou la deuxième branche.

De préférence, l'arête de coupe de la troisième branche présente une longueur inférieure à l'arête de coupe de la première branche et/ou de la deuxième branche.

Ainsi, la troisième branche supporte encore plus de pression que la première branche et la deuxième branche. La pénétration de la plaquette de coupe est facilitée et la quantité de matière découpée à chaque rotation est accrue. La vitesse de perçage est donc améliorée.

L'invention concerne également un outil de perçage, tel qu'un foret, caractérisé en ce qu'il comporte :
- un corps d'outil ; et
- une plaquette de coupe telle que présentée ci-avant, fixée à une extrémité du corps d'outil.

A titre d'exemple, l'extrémité du corps d'outil présente une fente et la plaquette de coupe est insérée dans cette fente et brasée.

L'invention sera mieux comprise à l'aide de la description qui suit, en référence au dessin schématique annexé représentant, à titre d'exemple, un foret selon l'invention.
Figure 1 est une vue en perspective d'un foret selon l'invention ;
Figure 2 est une vue en perspective d'une plaquette de coupe équipant le foret de figure 1 ;
Figure 3 est une vue de dessus de la plaquette de coupe de figure 2;
Figure 4 est une vue de côté de la plaquette de coupe de figure 2 ; et
Figure 5 est un graphique représentant la position axiale des points constituant des arêtes de coupe de la plaquette de coupe de figure 2.

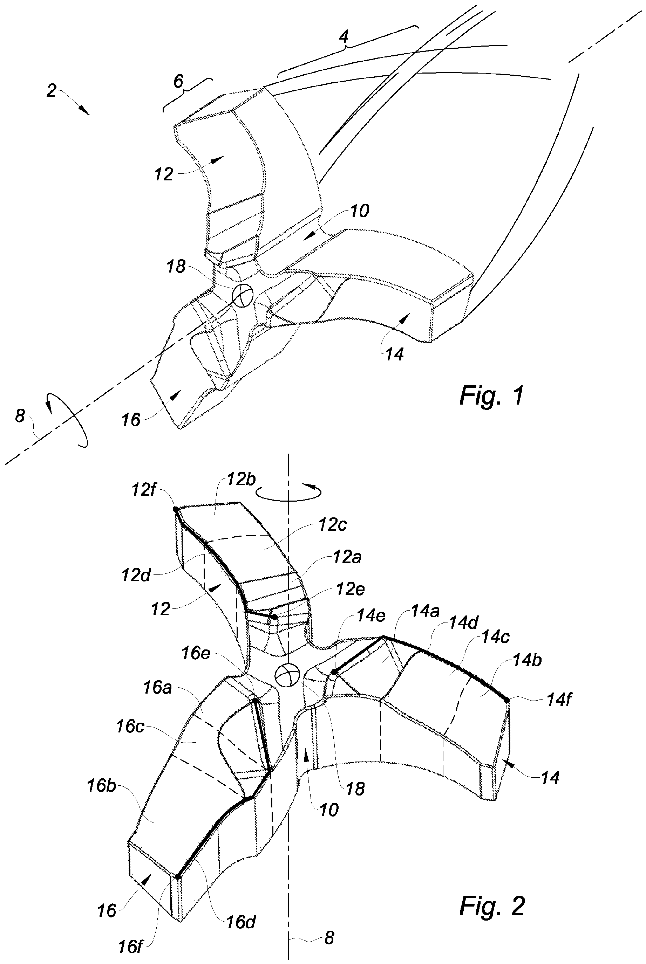

La figure 1 représente un foret 2. Ce foret 2 comporte un corps d'outil 4 et une plaquette de coupe 6 fixée à une extrémité du corps d'outil 4. Le corps d'outil 4 et la plaquette de perçage 6 sont conçus pour être entrainés en rotation autour d'un axe 8.

La plaquette de coupe 6 (mieux représentée aux figures 2 à 4) comporte une âme 10 s'étendant axialement.

La plaquette de coupe 6 comporte trois branches 12, 14, 16 s'étendant radialement depuis l'âme 10. Les branches 12, 14, 16 sont décalées angulairement de 120°.

Chaque branche 12, 14, 16 comprend une portion proximale respectivement 12a, 14a, 16a raccordée à l'âme 10, une portion distale respectivement 12b, 14b, 16b, et une portion centrale respectivement 12c, 14c, 16c raccordant la portion proximale 12a, 14a, 16a et la portion distale 12b, 14b, 16b.

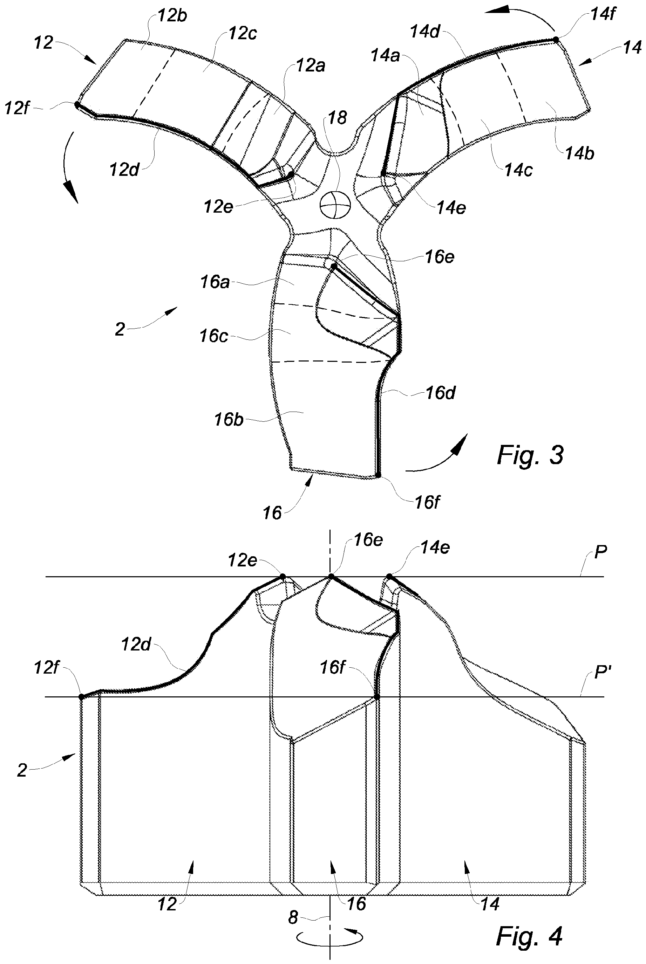

La portion distale 12b de la branche 12 est disposée radialement en avant par rapport à la portion centrale 12c (tel qu'il apparait mieux à la figure 3). La portion centrale 14c de la branche 14 est disposée radialement en avant par rapport à la portion distale 14b. La portion centrale 16c est plus large que la portion distale 16b.

Chaque branche 12, 14, 16 comprend une arête de coupe 12d, 14d, 16d s'étendant respectivement sur les portions 12a, 12b, 12c, 14a, 14b, 14c et 16a, 16b, 16c.

L'arête de coupe 12d de la branche 12 est courbe et présente, sur la portion distale 12b et la portion centrale 12c, un profil concave.

L'arête de coupe 14d de la branche 14 est courbe et présente, sur la portion distale 14b et la portion centrale 14c, un profil convexe.

L'arête de coupe 16d présente un décrochement radial.

L'arête de coupe 16d présente une longueur inférieure aux arêtes de coupe 12d, 14d.

Chaque arête de coupe 12d, 14d, 16d comprend un point d'attaque, respectivement 12e, 14e, 16e disposé axialement en avant. Les points d'attaque 12e, 14e, 16e sont disposés dans un même plan radial P.

Chaque arête de coupe 12d, 14d, 16d comprend un point de traine 12f, 14f, 16f, disposés axialement en arrière. Les points de traine 12f, 14f, 16f, sont disposés dans un même plan radial P'.

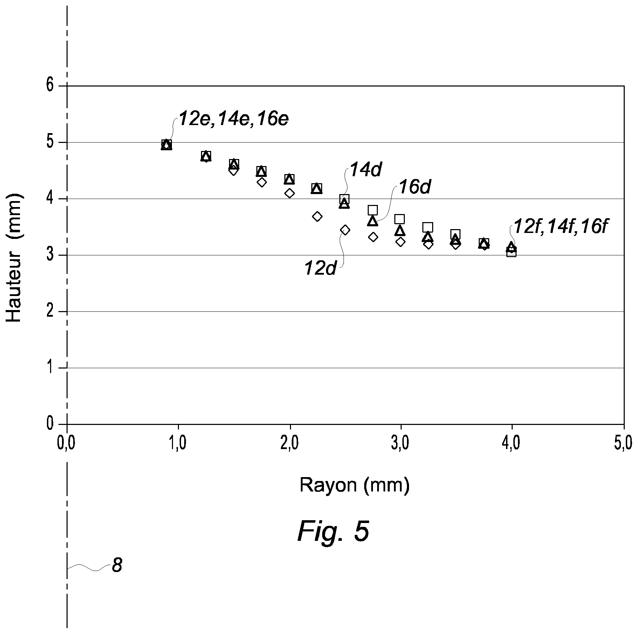

Les arêtes de coupe 14d, 16d sont axialement plus en avant que l'arête de coupe 12d entre les points d'attaque et les points de traine (tel qu'il apparait à la figure 5).

Les points d'attaque 12e, 14e, 16e sont disposés autour d'un évidement 18 ménagé à l'extrémité de l'âme 10. L'évidement 18 présente un fond de profil convexe. Plus spécifiquement, l'évidement 18 est bombé et présente une forme de calotte sphérique. L'évidement 18 est centré sur l'axe 8.

En variante le nombre de branches peut être égal à deux ou encore supérieur à trois.

## Revendications

1. Plaquette de coupe (6) conçue pour être fixée à une extrémité d'un corps d'outil (4) afin d'être entrainée en rotation autour d'un axe (8), comportant :
- une âme (10) s'étendant axialement ; et
- au moins une première branche (12) et une deuxième branche (14) s'étendant radialement depuis l'âme (10), la première branche (12) et la deuxième branche (14) comprenant chacune :
• une portion proximale (12a, 14a) raccordée à l'âme (10), une portion distale (12b, 14b), et une portion centrale (12c, 14c) raccordant la portion proximale (12a, 14a) et la portion distale (12b, 14b); et
• une arête de coupe (12d, 14d) s'étendant au moins sur la portion distale (12b, 14b) et la portion centrale (12c, 14c);
**caractérisée en ce que** :
- la portion distale (12b) de la première branche (12) est disposée radialement en avant par rapport à la portion centrale (12c) de la première branche (12) ; et
- la portion centrale (14c) de la deuxième branche (14) est disposée radialement en avant par rapport à la portion distale (14b) de la deuxième branche (14).

2. Plaquette de coupe (6) selon la revendication 1, **caractérisée en ce que** l'arête de coupe (12d) de la première branche (12) présente, au moins sur la portion distale (12b) et la portion centrale (12c), un profil concave ; et
**en ce que** l'arête de coupe (14d) de la deuxième branche (14) présente, au moins sur la portion distale (14b) et la portion centrale (14c), un profil convexe.

3. Plaquette de coupe (6) selon l'une quelconque des revendications 1 ou 2, **caractérisée en ce qu'**elle comporte au moins une troisième branche (16) comprenant :
• une portion proximale (16a) raccordée à l'âme (10), une portion distale (16b), et une portion centrale (16c) raccordant la portion proximale (16a) et la portion distale (16b) ; et
• une arête de coupe (16d) s'étendant au moins sur la portion distale (16b) et la portion centrale (16c).

4. Plaquette de coupe (6) selon la revendication 3, **caractérisée en ce que** chaque arête de coupe (12d, 14d, 16d) de la première branche (12), de la deuxième branche (14) et de la troisième branche (16) comprend un point d'attaque (12e, 14e, 16e) disposé axialement en avant ; et
**en ce que** les points d'attaque (12e, 14e, 16e) de la première branche (12), de la deuxième branche (14) et de la troisième branche (16) sont disposés dans un même plan radial (P).

5. Plaquette de coupe (6) selon la revendication 4, **caractérisée en ce que** les points d'attaque (12e, 14e, 16e) de la première branche (12), de la deuxième branche (14) et de la troisième branche (16) sont disposés autour d'un évidement (18) ménagé à une extrémité de l'âme (10).

6. Plaquette de coupe (6) selon la revendication 5, **caractérisé en ce que** l'évidement (18) présente un fond de profil convexe.

7. Plaquette de coupe (6) selon l'une quelconque des revendications 3 à 6, **caractérisée en ce que** la portion centrale (16c) de la troisième branche (16) est plus large que la portion distale (16b) de la troisième branche (16), de sorte que l'arête de coupe (16d) de la troisième branche (16) présente un décrochement.

8. Plaquette de coupe (6) selon l'une quelconque des revendications 3 à 7, **caractérisée en ce que** l'arête de coupe (16d) de la troisième branche (16) est, au moins en partie, axialement plus en avant que l'arête de coupe (12d) de la première branche (12) et/ou que l'arête de coupe (14d) de la deuxième branche (14).

9. Plaquette de coupe (6) selon l'une quelconque des revendications 3 à 8, **caractérisée en ce que** l'arête de coupe (16d) de la troisième branche (16) présente une longueur inférieure à l'arête de coupe (12d) de la première branche (12) et/ou à l'arête de coupe (14d) de la deuxième branche (14).

10. Outil de perçage (2), **caractérisé en ce qu'**il comporte :
- un corps d'outil (4) ; et
- une plaquette de coupe (6) selon l'une quelconque des revendications 1 à 9, fixée à une extrémité du corps d'outil (4).

## Patentansprüche

1. Schneidplatte (6), die gestaltet ist, um an einem Ende eines Werkzeugkörpers (4) befestigt zu werden, um um eine Achse (8) in Drehung angetrieben zu werden, Folgendes umfassend:
- einen Kern (10), der sich axial erstreckt; und
- zumindest einen ersten Flügel (12) und einen zweiten Flügel (14), die sich radial aus dem Kern (10) heraus erstrecken, wobei der erste Flügel (12) und der zweite Flügel (14) jeweils Folgendes umfassen:
-- einen proximalen Abschnitt (12a, 14a), der mit dem Kern (10) verbunden ist, einen distalen Abschnitt (12b, 14b), und einen zentralen Abschnitt (12c, 14c), der den proximalen Abschnitt (12a, 14a) und den distalen Abschnitt (12b, 14b) verbindet; und
-- eine Schneidkante (12d, 14d), die sich zumindest über den distalen Abschnitt (12b, 14b) und den zentralen Abschnitt (12c, 14c) erstreckt;
**dadurch gekennzeichnet, dass**:
- der distale Abschnitt (12b) des ersten Flügels (12) im Verhältnis zum zentralen Abschnitt (12c) des ersten Flügels (12) radial voran angeordnet ist; und
- der zentrale Abschnitt (14c) des zweiten Flügels (14) im Verhältnis zum distalen Abschnitt (14b) des zweiten Flügels (14) radial voran angeordnet ist.

2. Schneidplatte (6) nach Anspruch 1, **dadurch gekennzeichnet, dass** die Schneidkante (12d) des ersten Flügels (12) zumindest auf dem distalen Abschnitt (12b) und dem zentralen Abschnitt (12c) ein konkaves Profil aufweist; und
dadurch, dass die Schneidkante (14d) des zweiten Flügels (14) zumindest auf dem distalen Abschnitt (14b) und dem zentralen Abschnitt (14c) ein konvexes Profil aufweist.

3. Schneidplatte (6) nach einem der Ansprüche 1 oder 2, **dadurch gekennzeichnet, dass** sie zumindest einen dritten Flügel (16) umfasst, Folgendes umfassend:
-- einen proximalen Abschnitt (16a), der mit dem Kern (10) verbunden ist, einen distalen Abschnitt (16b), und einen zentralen Abschnitt (16c), der den proximalen Abschnitt (16a) und den distalen Abschnitt (16b) verbindet; und
-- eine Schneidkante (16d), die sich zumindest über den distalen Abschnitt (16b) und den zentralen Abschnitt (16c) erstreckt.

4. Schneidplatte (6) nach Anspruch 3, **dadurch gekennzeichnet, dass** jede Schneidkante (12d, 14d, 16d) des ersten Flügels (12), des zweiten Flügels (14) und des dritten Flügels (16) einen Angriffspunkt (12e, 14e, 16e) umfasst, der axial voran angeordnet ist; und
dadurch, dass die Angriffspunkte (12e, 14e, 16e) des ersten Flügels (12), des zweiten Flügels (14) und des dritten Flügels (16) auf einer selben radialen Ebene (P) angeordnet sind.

5. Schneidplatte (6) nach Anspruch 4, **dadurch gekennzeichnet, dass** die Angriffspunkte (12e, 14e, 16e) des ersten Flügels (12), des zweiten Flügels (14) und des dritten Flügels (16) um eine Ausnehmung (18) angeordnet sind, die an einem Ende des Kerns (10) ausgeführt ist.

6. Schneidplatte (6) nach Anspruch 5, **dadurch gekennzeichnet, dass** die Ausnehmung (18) einen konvexen Profilboden aufweist.

7. Schneidplatte (6) nach einem der Ansprüche 3 bis 6, **dadurch gekennzeichnet, dass** der zentrale Abschnitt (16c) des dritten Flügels (16) breiter ist, als der distale Abschnitt (16b) des dritten Flügels (16), sodass die Schneidkante (16d) des dritten Flügels (16) einen Absatz aufweist.

8. Schneidplatte (6) nach einem der Ansprüche 3 bis 7, **dadurch gekennzeichnet, dass** die Schneidkante (16d) des dritten Flügels (16) zumindest teilweise axial weiter voran ist, als die Schneidkante (12d) des ersten Flügels (12) und/ oder die Schneidkante (14d) des zweiten Flügels (14).

9. Schneidplatte (6) nach einem der Ansprüche 3 bis 8, **dadurch gekennzeichnet, dass** die Schneidkante (16d) des dritten Flügels (16) eine Länge kleiner als die Schneidkante (12d) des ersten Flügels (12) und/ oder als die Schneidkante (14d) des zweiten Flügels (14) aufweist.

10. Bohrwerkzeug (2), **dadurch gekennzeichnet, dass** es Folgendes umfasst:
- einen Werkzeugkörper (4); und
- eine Schneidplatte (6) nach einem der Ansprüche 1 bis 9, die an einem Ende des Werkzeugkörpers (4) befestigt wird.

## Claims

1. A cutting insert (6) designed to be fixed to an end of a tool body (4) in order to be driven in rotation about an axis (8), including:
- an axially extending core (10); et
- at least a first leg (12) and a second leg (14) extending radially from the core (10), the first leg (12) and the second leg (14) each comprising:
• a proximal portion (12a, 14a) connected to the core (10), a distal portion (12b, 14b), and a central portion (12c, 14c) connecting the proximal portion (12a, 14a) and the distal portion (12b, 14b); and
• a cutting edge (12d, 14d) extending at least on the distal portion (12b, 14b) and the central portion (12c, 14c);
**characterized in that**:
- the distal portion (12b) of the first leg (12) is disposed radially forward relative to the central portion (12c) of the first leg (12); and
- the central portion (14c) of the second leg (14) is disposed radially forward relative to the distal portion (14b) of the second leg (14).

2. The cutting insert (6) according to claim 1, **characterized in that** the cutting edge (12d) of the first leg (12) has, at least on the distal portion (12b) and the central portion (12c), a concave profile; and
**in that** the cutting edge (14d) of the second leg (14) has, at least on the distal portion (14b) and the central portion (14c), a convex profile.

3. The cutting insert (6) according to any one of claims 1 or 2, **characterized in that** it includes at least a third leg (16) comprising:
• a proximal portion (16a) connected to the core (10), a distal portion (16b), and a central portion (16c) connecting the proximal portion (16a) and the distal portion (16b); and
• a cutting edge (16d) extending at least on the distal portion (16b) and the central portion (16c).

4. The cutting insert (6) according to claim 3, **characterized in that** each cutting edge (12d, 14d, 16d) of the first leg (12), the second leg (14) and the third leg (16) comprises a leading point (12e, 14e, 16e) disposed axially forward; and
**in that** the leading points (12e, 14e, 16e) of the first leg (12), the second leg (14) and the third leg (16) are disposed in the same radial plane (P).

5. The cutting insert (6) according to claim 4, **characterized in that** the leading points (12e, 14e, 16e) of the first leg (12), the second leg (14) and the third leg (16) are disposed around a cavity (18) arranged at one end of the core (10).

6. The cutting insert (6) according to claim 5, **characterized in that** the cavity (18) has a convex-profiled bottom.

7. The cutting insert (6) according to any one of claims 3 to 6, **characterized in that** the central portion (16c) of the third leg (16) is larger than the distal portion (16b) of the third leg (16), so that the cutting edge (16d) of the third leg (16) has a recess.

8. The cutting insert (6) according to any one of claims 3 to 7, **characterized in that** the cutting edge (16d) of the third leg (16) is, at least in part, axially further forward than the cutting edge (12d) of the first leg (12) and/or the cutting edge (14d) of the second leg (14).

9. The cutting insert (6) according to any one of claims 3 to 8, **characterized in that** the cutting edge (16d) of the third leg (16) has a length smaller than the cutting edge (12d) of the first leg (12) and/or the cutting edge (14d) of the second leg (14).

10. A drilling tool (2), **characterized in that** it includes:
- a tool body (4); and
- a cutting insert (6) according to any one of claims 1 to 9, attached to one end of the tool body (4).
